# EUROPEAN PATENT APPLICATION

(11) **EP 4 442 175 A1**
(43) Date of publication of application: **09.10.2024**
(21) Application number: 22901538.3
(22) Date of filing: 27.09.2022
(51) Int. Cl.: A47J 31/42, A47J 42/10, A47J 42/46, A47J 31/02, A47J 31/44

(54) **DRIP COFFEE MACHINE**

(30) Priority: 03.12.2021 KR 20210171549
(71) Applicant: LG Electronics Inc., Yeongdeungpo-gu Seoul 07336 (KR)
(72) Inventor: NAM, Hyeunsik, Seoul 08592 (KR); YANG, Jungkeun, Seoul 08592 (KR); CHOI, Seung-Yeon, Seoul 08592 (KR)
(74) Representative: Vossius & Partner Patentanwälte Rechtsanwälte mbB
(86) International application number: PCT/KR2022/014490
(87) International publication number: WO 2023/101178

(57) **Abstract**

The present invention relates to a drip coffee machine. The drip coffee machine according to an embodiment of the present invention comprises: a case; a hopper for accommodating coffee beans; and a grinder for receiving and grinding the coffee beans, wherein the grinder is coupled to the case in a detachable manner, and the grinder includes: a grinder body including a rotating burr; and a grinder driving part, which is connected to the grinder body and provides rotating force to the burr.

## Description

### CROSS-REFERENCE TO RELATED APPLICATION

This application claims priority to and the benefit of Korean Patent Application No. 10-2021-0171549, filed on 2021.12.03, the disclosure of which is incorporated herein by reference in its entirety.

### BACKGROUND

### [Technical Field]

Embodiments of the present invention relate to a drip coffee machine. More specifically, embodiments of the present invention relate to a drip coffee machine that may maintain coffee quality by minimizing a path for transporting coffee powder, improves a grinder to be detachable, making it easy to clean, suppress the flying of coffee beans and prevent coffee beans from sticking to grinders, etc.

### [Background Art]

The following description is only for the purpose of providing background information related to embodiments of the present disclosure, and the contents to be described do not necessarily constitute related art.

Recently, many users are making and drinking coffee at home in various ways. In this way, an apparatus that allows a user to prepare and drink coffee is called a coffee machine or coffee maker.

A drip coffee machine refers to an apparatus that extracts coffee using a drip coffee method.

The drip coffee method refers to a method of grinding coffee beans, pouring heated water over them, filtering out coffee powder, and extracting only liquid coffee.

The drip coffee method is commonly used not only in coffee shops but also in general households recently because it can best express the unique taste and aroma of coffee depending on the coffee production location or the degree of roasting of the coffee beans.

The most representative drip coffee methods are briefly explained as follows. First, the user inserts a paper filter into the dripper, and then place the dripper on a server and pour the ground coffee powder into the dripper. Next, heated water is poured and supplied to the coffee powder contained in the dripper using a hand drip motion determined by the user. Afterwards, the heated water passes through the ground coffee beans contained in the dripper to extract liquid coffee, and the liquid coffee passes through the filter and is finally placed on the server located at the bottom of the dripper.

The acidity or concentration of coffee extracted using the drip coffee method may vary depending on the way the user pours water into the coffee powder contained in the dripper, the amount of water supplied, and the time the coffee is extracted.

Recently, technology is being introduced for a drip coffee machine that grinds coffee beans in a grinder to make coffee powder, that is, coffee powder, and then supplies the coffee powder and water to a dripper to extract liquid coffee.

However, according to the conventional method, the grinder grinds coffee beans by rotating a burr, and static electricity is generated due to friction during the grinding process of coffee beans.

The ground coffee is transported along a predetermined passageway, and due to static electricity, the ground coffee sticks to the passageway or is discharged to the outside and sticks to surrounding structures, causing the problem of contaminating an apparatus and its surroundings.

As a prior literature related to the present invention, Japanese patent application No. 2018-161177 (hereinafter referred to as Prior Literature 1) discloses a coffee bean grinder equipped with electrostatic grounding.

The coffee bean grinder of Prior Literature 1 prevents fine particles from depositing on the surface of a coffee grinding apparatus due to electrostatic charging on the flow of particles discharged from the grinding apparatus.

For this purpose, the coffee bean grinder of Prior Literature 1 has an electrical ground contact, which is grounded through an electrical connection, and a container containing the ground coffee contains an electrically conductive material. Accordingly, when the ground coffee beans are placed in the container, the electrical ground contact is disposed in contact with the container, thereby reducing the adhesion of the ground coffee beans due to static electricity.

However, Prior Literature 1 has the disadvantage that the container itself containing the coffee powder must be made of an electrically conductive material, and that the static electricity elimination effect cannot be expected when using a regular plastic or glass container.

In other words, in a drip coffee machine that is integrated with a grinder that grinds coffee beans, the ground coffee powder is directly received in the dripper, but electrically conductive materials cannot be applied to the dripper (or filter). For this reason, it is difficult to apply the container made of the electrically conductive material of Prior Document 1.

In addition, because static electricity is generated by friction when coffee beans are ground by the rotation of the burr configured in the grinder, the coffee powder itself is already electrostatic. For this reason, in the process of transporting statically charged coffee powder, the phenomenon in which coffee power sticks to surrounding structures other than the container occurs, and the problem of contaminating the surroundings still remains.

As another prior literature related to the present invention, Republic of Korea Patent Publication No. 10-2078457 (hereinafter referred to as Prior Literature 2) discloses a coffee bean grinding apparatus.

The coffee bean grinding apparatus in Prior Literature 2 includes a bean grinding part that grinds coffee beans to make coffee powder, a piping part that transports the coffee powder, a cover part that opens and closes the piping part, and a container part that receives the coffee powder.

According to Prior Literature 2, a blowing fan is used to create an air flow in the piping part to separate the coffee powder into first and second powders according to particle size, and the piping part is grounded to eliminate the static electricity caused by friction between the coffee powder and the piping part.

However, in the case of Prior Literature 2, the coffee bean grinding part and container are connected with the piping unit, and the piping unit is grounded to eliminate static electricity from the coffee powder.

However, it is impossible to apply the configuration of Prior Literature 2 to a drip coffee machine in which the bean grinding part (i.e. grinder) and container (i.e. dripper) are arranged vertically and no piping unit exists. In addition, in the case of Prior Literature 2, there is a disadvantage that it cannot solve the problem of static electricity caused by friction within the coffee bean grinding part (i.e., grinder).

### [DISCLOSURE]

### [Technical Problem]

An object of the present invention is to provide a drip coffee machine that can maintain coffee quality by arranging a hopper, grinder, and dripper vertically upward and downward to reduce a movement path of coffee powder and minimize a structure to which the coffee powder can stick.

Another object of the present invention is to provide a drip coffee machine that can improve a structure of a grinder to be detachable, so that the grinder can be easily separated or coupled from/to a case, and thus can easily clean coffee powder stuck on the grinder.

Another object of the present invention is to provide a drip coffee machine that changes a wall surface of a guide that supplies coffee powder to a dripper to a shape inclined toward a center, so that the flying of coffee powder is minimized when the coffee powder is fed into the dripper.

Another object of the present invention is to provide a drip coffee machine that can minimize contamination due to coffee beans by eliminating the static electricity generated from the burr by placing a detachable grinder in direct contact with a ground plate when attaching the detachable grinder to a case.

The objects of the present invention are not limited to the objects mentioned above, and other objects and advantages of the present invention that are not mentioned can be understood through the following description, and can be understood more clearly by the embodiments of the present invention. In addition, it will be readily apparent that the objects and advantages of the present invention can be realized by the means and combinations thereof indicated in the claims.

### [Technical Solution]

A drip coffee machine according to an embodiment of the present invention includes a case, a hopper that is located on an upper portion of the case and receives a coffee bean, and a grinder that receives the coffee bean from the hopper and grinds the coffee bean. The grinder may be detachably coupled to the case. The grinder includes a grinder body that includes a burr that rotates to grind the coffee bean supplied from the hopper, and a grinder driving part that is connected to the grinder body and provides a rotational force to the burr.

The grinder body includes a burr housing embedding the burr, and a burr rotator that is coupled to surround the burr and receives the rotational force from the grinder driving part to rotate the burr. The burr includes an outer burr that is coupled to an inside of the burr rotator, and receives the rotational force from the burr rotator and rotates to grind the coffee bean, and an inner burr that is cocentric with the outer burr and is located inside the outer burr.

The burr housing includes a burr upper housing that is vertically disposed to face the hopper upward and downward, and a burr lower housing that is coupled to a lower portion of the burr upper housing and embeds the burr in a space provided between the burr upper housing and the burr lower housing.

The grinder body further includes a grinder shaft that penetrates the center of the burr and is coupled thereto. The grinder shaft may be formed to penetrate the burr upper housing and the burr lower housing and protrude to the upper and lower portions of the burr housing by a predetermined length.

The grinder body further includes a grinder level knob that is disposed to face the lower portion of the hopper and adjusts the grinding degree of the coffee bean supplied from the hopper. The grinder level knob may be coupled to an upper protrusion portion of the grinder shaft at the upper portion of the burr upper housing.

The burr includes an outer burr that is coupled to the inside of the burr rotator, receives the rotational force from the burr rotator and rotates to grind the coffee bean, and an inner burr that is cocentric with the outer burr and is located inside the outer burr. The rotation of the grinder level knob is adjusted in a set direction to adjust the grinding degree of the coffee bean, and when the grinder level knob is rotated, a gap between the outer burr and the inner burr may be changed.

The grinder body further includes a grinder shaft fixing part that is located at the lower portion of the burr lower housing and is coupled to the lower protrusion portion of the grinder shaft to support the lower end of the grinder shaft.

The grinder body includes a burr housing embedding the burr, and a burr rotator that is coupled to surround the burr and receives the rotational force from the grinder driving part to rotate the burr, and the grinder body further includes a burr holder that is located inside the burr housing and holds the burr rotator and outer burr.

The grinder body includes a burr housing embedding the burr, and a burr rotator that is coupled to surround the burr and receives the rotational force from the grinder driving part to rotate the burr. The grinder body further includes a ground guide that is located at the lower portion of the burr rotator, and discharges the coffee powder ground by the rotation of the burr to a lower portion thereof.

The ground guide may be coupled to be vertically disposed at the lower portion of the burr lower housing.

The grinder body includes a burr housing embedding the burr, and a burr rotator that is coupled to surround the burr and receives the rotational force from the grinder driving part to rotate the burr. The grinder body further includes a bearing holder that surrounds the burr rotator in a circumferential direction and includes a ball bearing to reduce the rotational friction of the burr rotator.

The grinder body includes a burr housing embedding the burr, and a burr rotator that is coupled to surround the burr and receives the rotational force from the grinder driving part to rotate the burr. The grinder body further include a coffee bean inlet that injects the coffee bean supplied from the hopper toward the burr.

The coffee bean inlet may be located in the inner center of the burr upper housing.

The grinder body includes a burr housing embedding the burr, and a burr rotator that is coupled to surround the burr and receives the rotational force from the grinder driving part to rotate the burr. The grinder body further include a release button that is elastically supported by springs on both sides of the burr housing and is pressed to enable attachment and detachment of the ground body.

A plurality of release buttons may be provided on both sides of the burr upper housing to be elastically supported by springs and capable of being pressed. A hook protrusion protruding outward may be formed at the bottom of the release button, and a fastening piece to which the hook protrusion is fixed may be formed at the base of the ground driving part. Accordingly, when the release button is pressed in the radial direction from both sides of the burr upper housing and the hook protrusion is inserted into the fastening piece, the grinder body is mounted. Conversely, when the release button is pressed in the radial direction on both sides of the burr upper housing and the hook protrusion is separated from the fastening piece, the ground body may be separated.

The grinder driving part includes a grinder motor that generates the rotational force necessary for rotation of the burr, a rotational force transmission gear that includes a first gear connected to the driving shaft of the grinder motor, and a second gear engaged with and connected to the first gear to have a set gear ratio, a worm gear that is connected to the rotation center of the second gear and rotates, a worm wheel that rotates in engagement with the worm gear, and a driving gear that is coupled and rotates concentrically with the worm wheel and transmits the rotational force to the burr.

The driving gear is arranged to engage with the burr rotator, so that the burr rotator rotates in conjunction with the rotation of the driving gear, and the outer burr rotates with the burr rotator inside the burr rotator. According to this structure, the grinder body may be coupled in a detachable manner and may have a structure that is advantageous for partial separation and cleaning when necessary.

The grinder driving part includes a gear case that mounts the rotational force transmission gear, worm gear, and worm wheel inside, and a base that seats and supports the grinder motor, gear case, and driving gear.

The gear case includes a gear upper case that is coupled to cover the rotational force transmission gear, worm gear, and an upper portion of the worm wheel, and a gear lower case that is coupled to a lower portion of the gear upper case and is seated on a first seating part provided on one side of the base and fixed to an upper portion of the base.

A second seating portion on which the grinder body is seated is formed on the other side of the base, and a ground plate made of an elastic metal may be further provided at the lower portion of the base.

One end of the ground plate is connected to the case of the drip coffee machine, that is, the electrical ground of the body, and the other end of the ground plate may be in direct physical contact with a metal portion of the grinder body that is detachably coupled, for example, the ground guide made of a metal material.

The grinder body includes a burr housing embedding the burr, and a burr rotator that is coupled to surround the burr and receives the rotational force from the grinder drive part to rotate the burr. The grinder body further includes a ground guide that is located at a lower portion of the burr rotator and discharges the coffee powder ground by rotation of the burr to a lower portion thereof, and the ground plate may be in contact with the ground guide when the ground body is seated on the second seating part.

As an example, the inner burr, grinder shaft, grinder shaft fixing part, and ground guide may be made of an electrically conductive material, for example, a metal material. In this case, a ground path is formed to the inner burr, grinder shaft, grinder shaft fixing part, ground guide, ground plate, and case of the drip coffee machine, that is, electrical ground of the body.

As another example, if the burr rotator connected to the burr and the driving gear that transmits the rotational force to the burr rotator are made of an electrically conductive material, for example, metal, the driving gear may be connected to the case of the drip coffee machine, that is, the electrical ground of the body. In this case, when grinding the coffee bean, the burr rotator and driving gear are always in contact, so the static electricity generated when grinding the coffee bean may be eliminated. In this case, the ground path may be formed along the outer bur, burr rotator, driving gear, driving gear shaft, and electrical ground.

As another example, the bar lower housing of the grinder body is made of an electrically conductive material, for example, a metal material. Also, the base of the grinder driving part, more specifically, the second seating part of the base is made of an electrically conductive material, e.g., a metal material, so it may be connected to the electrical ground. In this case, when grinding coffee beans, the lower burr housing and base of the grinder driving part remain in contact with each other, so the static electricity generated during the grinding process of coffee beans may be eliminated using the ground path connected between them. In this case, the ground path may be formed along the burr lower housing, base of the grinder driving part, and electrical ground.

The ground guide may have a shape in which the inner wall surface slopes toward the center as it goes downward. The coffee powder discharged through the grinder body to the upper portion of the dripper falls to the lower portion and scatters around, easily contaminating surrounding structures. If the inner wall of the ground guide is improved to a shape that slopes toward the center as it goes toward the lower portion, the inertial force of the coffee powder flowing along the slope directs the coffee powder to the center of the dripper, thereby reducing contamination of surrounding structures.

A drip coffee machine according to another embodiment of the present invention includes a water tank that is located at a rear top of the case and stores water, a hopper that is located at a front top of the case and stores a coffee bean, a grinder that is located at a lower portion of the hopper and receives the coffee bean from the hopper and grinds the coffee bean, a dripper that is located at a lower portion of the grinder, receives the coffee powder ground from the grinder and extracts liquid coffee, a water outlet unit that includes a water outlet dropping the water into an inside of the dripper, and a driving unit that changes a position of the water outlet within an upper drip area of the dripper. The grinder is detachably coupled to the case, and the hopper, grinder, and dripper may be vertically disposed upward and downward.

The grinder body includes a burr housing embedding the burr, and a burr rotator that is coupled to surround the burr and receives the rotational force from the grinder driving part to rotate the burr. The grinder body further includes a release button that is elastically supported by springs on both sides of the burr housing and is pressed to enable attachment and detachment of the ground body.

### [Advantageous Effect]

According to an embodiment of the present invention, the hopper, grinder, and dripper are arranged vertically upward and downward to eliminate a separate passage through which the coffee powder is transported, thereby minimizing the movement path of the coffee powder and minimizing a structure to which coffee powder may stick. Accordingly, variations in coffee quality can be minimized.

In addition, according to an embodiment of the present invention, the structure of the grinder is improved to be detachably coupled to the case, so that the separation and coupling making it easy to separate and couple with the grinder, so that the grinder may be easily separated and coupled, and the coffee powder can be easily cleaned.

In addition, according to an embodiment of the present invention, the wall surface of the guide that supplies the coffee powder to the dripper is improved to be inclined toward the center, so the ground coffee may be dropped into the central area of the dripper without being blown around. Accordingly, the scattering of the coffee powder can be minimized.

In addition, according to an embodiment of the present invention, static electricity generated in a burr may be eliminated by directly contacting (i.e., grounding) the detachable grinder with the ground plate when coupled to the case. Accordingly, it is possible to prevent the coffee powder from sticking to the lower portion of the grinder or other surrounding structures and contaminating them.

In addition to the above-described effects, specific effects of the present invention are described below while explaining specific details for carrying out the invention.

### [Description of Drawings]

FIG. 1 is a perspective view of a drip coffee machine according to an embodiment of the present invention.
FIG. 2 is a front view of a drip coffee machine according to an embodiment of the present invention.
FIG. 3 is a schematic cross-sectional view of a drip coffee machine according to an embodiment of the present invention.
FIG. 4 is a diagram of the main parts of a drip coffee machine according to an embodiment of the present invention.
FIG. 5 is a perspective view showing a grinder of a drip coffee machine according to an embodiment of the present invention.
FIG. 6 is an exploded perspective view showing a detailed configuration of a grinder of a drip coffee machine according to an embodiment of the present invention.
FIG. 7 is a side cross-sectional view showing an internal structure of a grinder of a drip coffee machine according to an embodiment of the present invention.
FIG. 8 is a side exploded cross-sectional view showing an internal structure of a grinder of a drip coffee machine according to an embodiment of the present invention.
FIG. 9 is a front cross-sectional view showing an internal structure of a grinder of a drip coffee machine according to an embodiment of the present invention.
FIG. 10 is a front exploded cross-sectional view showing an internal structure of a grinder of a drip coffee machine according to an embodiment of the present invention.
FIG. 11 is a diagram showing a flow direction of coffee beans (or coffee powder) in an internal structure of a grinder of a drip coffee machine according to an embodiment of the present invention.
FIG. 12 is a diagram showing a first implementation example of a ground path for eliminating static electricity in an internal structure of a grinder of a drip coffee machine according to an embodiment of the present invention.
FIG. 13 is a diagram showing a second implementation example of a ground path for eliminating static electricity in an internal structure of a grinder of a drip coffee machine according to an embodiment of the present invention.
FIG. 14 is a diagram showing a third implementation example of a ground path for eliminating static electricity in an internal structure of a grinder of a drip coffee machine according to an embodiment of the present invention.

### [Mode for Invention]

The above-described objectives, features and advantages are specifically described with reference to the attached drawings hereunder such that one having ordinary skill in the art to which the disclosure pertains may easily implement the technical spirit of the disclosure. In describing the disclosure, detailed description of known technologies in relation to the disclosure is omitted if it is deemed to make the gist of the disclosure unnecessarily vague. Below, preferred embodiments of the disclosure are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and a first component may be a second component unless stated to the contrary.

Throughout the disclosure, each component may be provided as a single one or a plurality of ones, unless explicitly stated to the contrary.

Hereinafter, when any component is arranged at "an upper portion (or a lower portion)" of the component or "on (or under") of the component, any component can be arranged in contact with an upper surface (or a lower surface) of the component, and another component can be interposed between the component and any component arranged on (or under) the component.

Further, when one component is described as being "connected", "coupled", or "connected" to another component, the components can be directly connected or able to be connected to the other component; however, it is also to be understood that an additional component can be "interposed" between the two components, or the two components can be "connected", "coupled" or "connected" through an additional component.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

In addition, as used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

In the following description, coffee beans refer to roasted coffee beans, not the raw coffee beans harvested from the coffee tree.

In the following description, the size of ground coffee powder (or powder) may vary depending on preference and type of coffee bean. Ground coffee powder (or powder) does not mean coffee powder with a specific size, but coffee powder (or powder) with various sizes that can be changed depending on preference and type of coffee bean.

In the following description, a coffee machine refers to an apparatus that grinds coffee beans in a grinder, mixes the ground coffee powder with water, and dissolves the coffee ingredients in the water to extract liquid coffee.

In the following description, extracting coffee means supplying coffee powder to the dripper and then supplying water to bring the coffee powder and water into contact with each other to create liquid coffee containing coffee ingredients extracted from the coffee powder.

Hereinafter, the present invention will be described with reference to drawings showing the configuration of a drip coffee machine according to an embodiment of the present invention.

### [Overall structure of a drip coffee machine]

Hereinafter, the overall structure of a drip coffee machine according to an embodiment of the present invention will be described in detail with reference to the attached drawings.

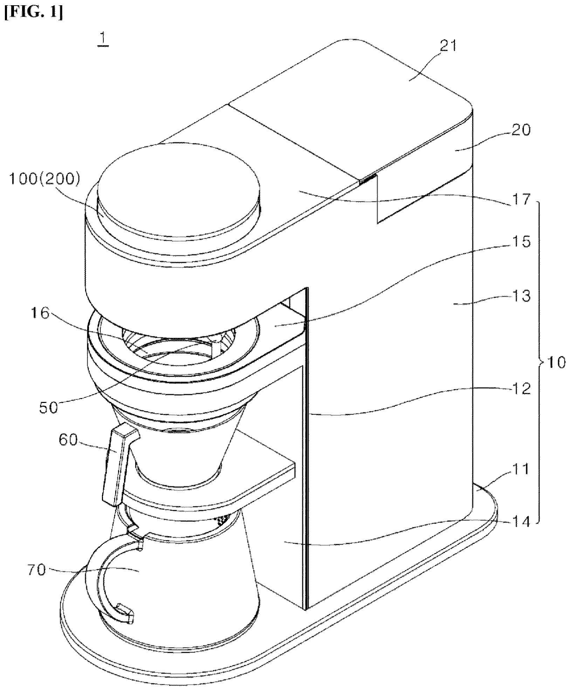

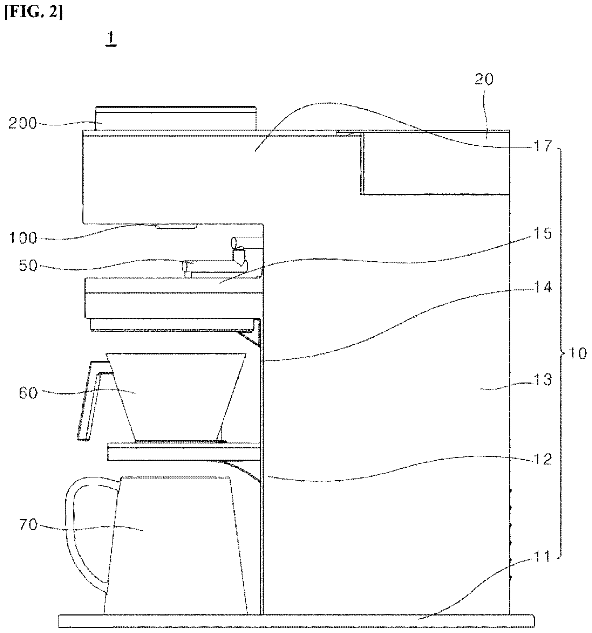

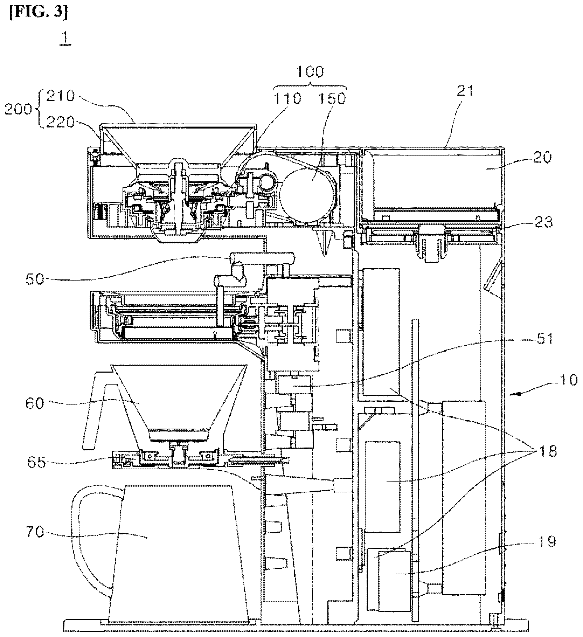

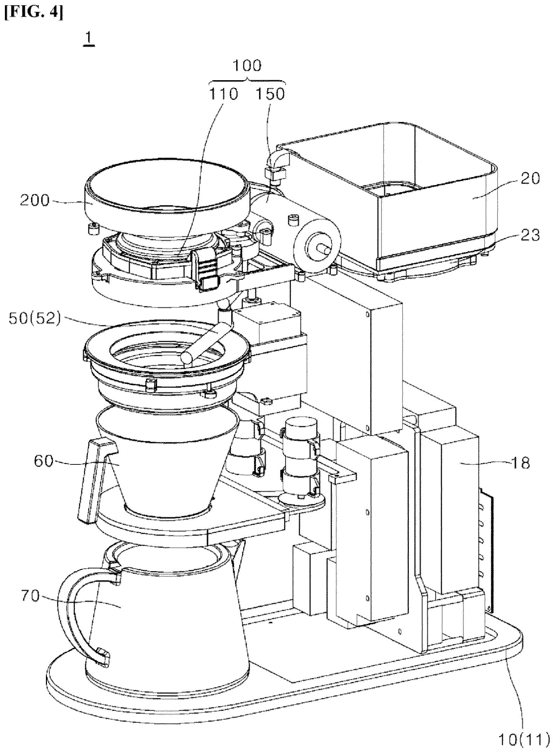

FIG. 1 is a perspective view of a drip coffee machine according to an embodiment of the present invention, FIG. 2 is a front view of a drip coffee machine according to an embodiment of the present invention, FIG. 3 is a schematic cross-sectional view of a drip coffee machine according to an embodiment of the present invention, and FIG. 4 is a diagram of the main parts of a drip coffee machine according to an embodiment of the present invention.

As shown, a drip coffee machine 1 according to the present invention includes a case 10, a water tank 20, a hopper 200, a grinder 100, a water outlet unit 50, a dripper 60, a coffee server 70, and a driving unit 80.

The case 10 corresponds to a body of a drip coffee machine that connects and couples the water tank 20, hopper 200, grinder 100, water outlet unit 50, dripper 60, coffee server 70, and driving unit 80 with each other.

In addition, the case 10 serves to support each of the water tank 20, hopper 200, grinder 100, water outlet unit 50, dripper 60, coffee server 70, and driving unit 80 to be installed at a designated position.

The case 10 may be provided in a manner in which multiple case parts are assembled.

For example, the case 10 includes a base part 11, an inner case 12, an outer case 13, a first front part 14, a second front part 15, and an upper case 16.

The base part 11 is formed to have a plate shape to form the bottom of the case 10. The base part 11 provides a seating surface on which the coffee server 70 is seated.

The inner case 12 is a frame installed at a set height at the rear of a front space where the hopper 200, grinder 100, dripper 60, and coffee server 70 are disposed upward and downward.

The outer case 13 is a frame installed standing at the rear of the inner case 12. The outer case 13 is assembled with the inner case 13 from front and rear to form a box-shaped body.

A predetermined box-shaped space is provided between the inner case 12 and the outer case 13. Through this box-shaped space, various parts including multiple PCBs, PCB supporters supporting multiple PCBs, and blowing fans may be disposed.

The water tank 20 that is detachably coupled to the case 10 is located at the top of the outer case 13.

The first front part 14 is installed upright to be located in front of the inner case 12.

The second front part 15 is a frame that is coupled to protrude forward from the first front part 14.

A circular hole 16 is formed inside the plane of the second front part 15, and through this circular hole, the pipe of the water outlet unit makes a spiral motion and supplies water to the inside of the dripper. The driving unit 80 that implements a spiral motion of the water outlet unit is located in the second front part 15.

The upper case 17 is coupled to the tops of the inner case 12 and first front part 14. The hopper 200 may be located in the upper inner portion of the upper case 17, and the grinder 100 may be disposed in the lower inner portion of the upper case 17 at a position parallel to the hopper 200 upward and downward.

The water tank 20 refers to a water storage container that stores water to be supplied to the dripper 60 containing ground coffee powder when extracting coffee. The water tank 20 is located at the top of the outer case 13, and is provided with a structure that may be detachably coupled to and separated from the case 10.

In addition, the water tank 20 further includes an induction heating device 23 that may heat the stored water to a set temperature.

A heating plate 22 heated in an induction heating manner by the induction heating device 23 may be inserted and disposed in the inner lower portion of the water tank 20.

The induction heating device 23 is coupled to the case 10. Specifically, the induction heating device 23 is disposed spaced apart from the lower portion of the water tank 20 within the case 10, and may be disposed to face the heating plate 22.

The water tank 20 includes a water tank cover 21 that is coupled to open and close the open top.

The water stored in the water tank 20 is heated to a predetermined temperature by the heating plate 22, which is heated according to the induction heating operation of the induction heating device 23.

The hopper 200 is a device that supplies coffee beans to the grinder 100.

The hopper 200 may have a container shape capable of storing a set amount of coffee beans. For example, the hopper 200 includes a hopper body 210 in the shape of a container that may store coffee beans, and a hopper cover 220 that closes the open upper portion of the hopper body 210.

The coffee beans stored in the hopper 200 may be supplied to the grinder 100 located below the hopper 200 and may be ground into coffee powder, that is, in the form of bean powder.

The grinder 100 refers to a device that grinds coffee beans.

The grinder 100 receives roasted coffee beans introduced through the hopper 200 and grinds the coffee beans into powder of a set size or less.

For example, the grinding degree of coffee powder ground in a grinder may be adjusted according to the user's selection. In general, the grinding degree may vary depending on the type of coffee bean, and the degree of coffee extraction may also vary accordingly. Accordingly, it may set the grinding degree depending on the user's preference and/or the type of coffee bean.

The grinder 100 may be located at the upper portion of the dripper 60.

In other words, the hopper 200 that stores and supplies coffee beans, the grinder 100 that grinds the coffee beans, and the dripper 60 that receives ground coffee powder and extracts liquid coffee may be disposed vertically upward and downward.

With this structure, there is no need for a separate passage through which coffee beans (or coffee powder) must be transported in a certain direction, thereby minimizing the movement path of the coffee powder. In addition, surrounding structures to which coffee powder may stick may be minimized. As a result, variation in coffee quality may be minimized.

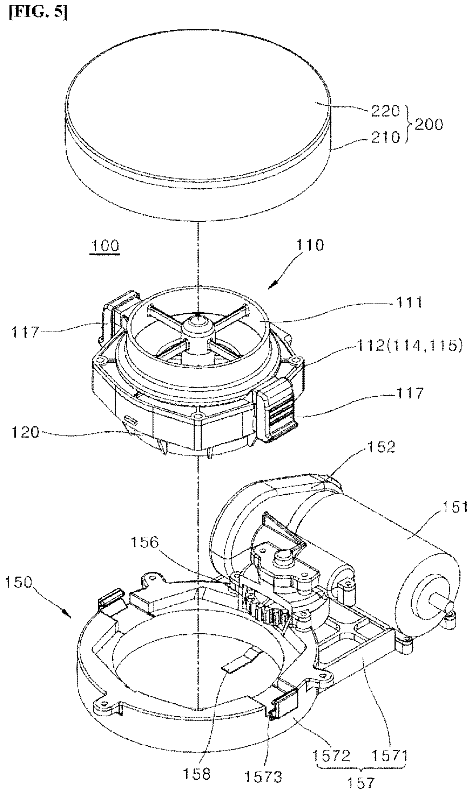

The grinder 100 includes a grinder body 110 that includes a burr 114 that rotates to grind the coffee beans supplied from the hopper 200, and a grinder driving part 150 that provides rotational force to the burr 114. The detailed configuration of the grinder 100 will be described later with reference to FIGS. 5 to 14.

Meanwhile, the coffee powder ground in the grinder 100 is supplied by falling toward the dripper 60 located at the lower portion of the grinder 100.

The water outlet unit 50 may be located between the grinder 100 and the dripper 60.

The water outlet unit 50 is a device that supplies water to the dripper 60 after the coffee powder ground in the grinder 100 is supplied into the dripper 60. The water outlet unit 50 withdraws the water heated to a set temperature from the water tank 20 and supplies the water to the inside of the dripper 60. Accordingly, the coffee powder contained inside the dripper 60 may be mixed with the water heated to a set temperature to extract liquid coffee.

The water outlet unit 50 is connected to the water tank 20 and further includes a pump 51 for moving water discharged from the water tank 20 and a water movement pipe 52.

In addition, the water outlet unit 50 may be connected to the driving unit 80 to enable implementation of a spiral motion. The water outlet 55 of the water outlet unit 50 may be connected to the driving unit 80.

The driving unit 100 changes the position of the water outlet 55 within the upper drip area of the dripper 60 (that is, an area where water falls toward the coffee powder contained in the dripper 60).

Meanwhile, a replaceable disposable or multi-use filter may be installed inside the dripper 60. The filter extracts only the liquid coffee components from the coffee powder mixed with water.

The dripper 60 stably supports the filter and may have a shape that allows liquid coffee extracted through the filter to fall to the coffee server 70 below.

In addition, the dripper 60 allows the coffee powder ground in the grinder 100 to fall smoothly and be supplied to the inside of the dripper 60, and has a shape that allows the water supplied through the water outlet unit 50 to be well received into the inside of the dripper 60.

For example, it is preferable for the upper portion (i.e., the inlet) of the dripper 60 to be shaped like a funnel with a larger cross-sectional area than that of the lower portion (i.e., the outlet).

In addition, the dripper 60 may be further equipped with an automatic flow control valve 65.

The automatic flow control valve 65 may open and close the lower portion (i.e., outlet) of the dripper 60 or adjust the flow rate according to the drip recipe desired by the user. After the drip operation of liquid coffee is completed, the flow control valve 65 may be automatically closed to stop water extraction.

The coffee server 70 may be disposed below the dripper 60. The coffee server 70 refers to a liquid coffee storage container that receives the liquid coffee extracted through the lower portion (i.e., outlet) of the dripper 60 and stores the liquid coffee so that the user can drink it.

The coffee server 70 may be coupled to the case 10, more specifically, the base part 11 in a detachable manner. The coffee server 70 may be separated from the base part 11 and carry out the coffee to the outside while containing the dripped liquid coffee.

### [Detailed configuration of a grinder with improved cleaning structure]

Hereinafter, the detailed configuration of the grinder of the drip coffee machine according to an embodiment of the present invention will be described in detail with reference to the attached FIGS. 5 to 10.

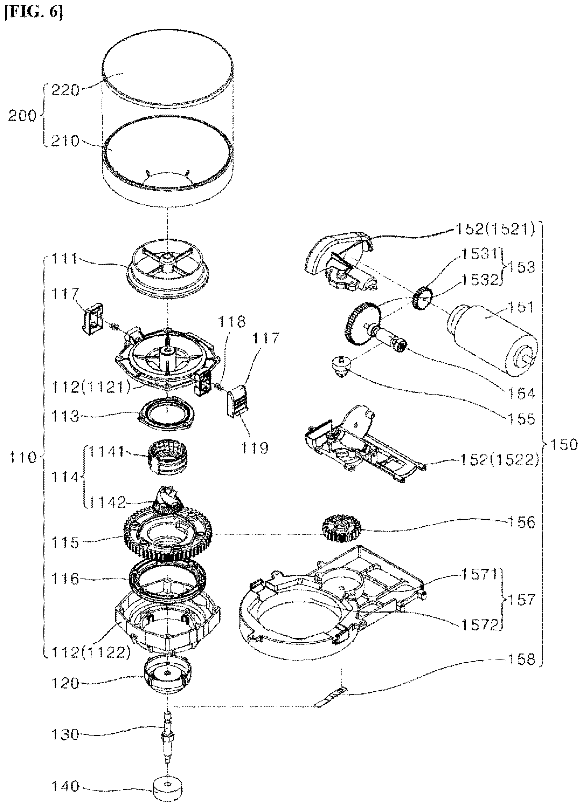

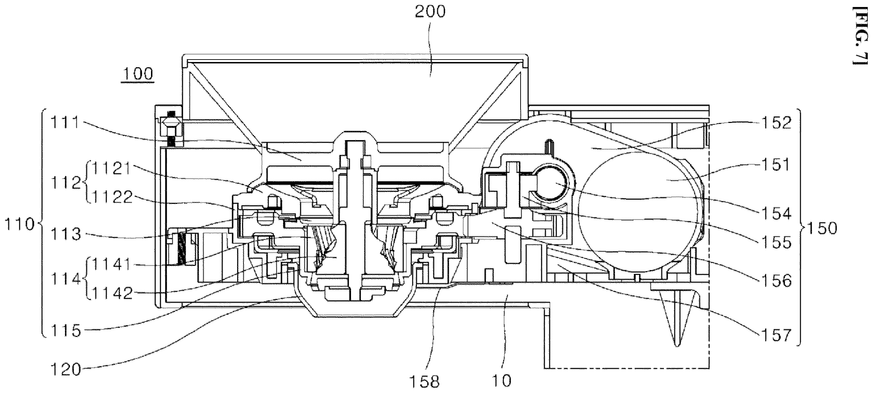

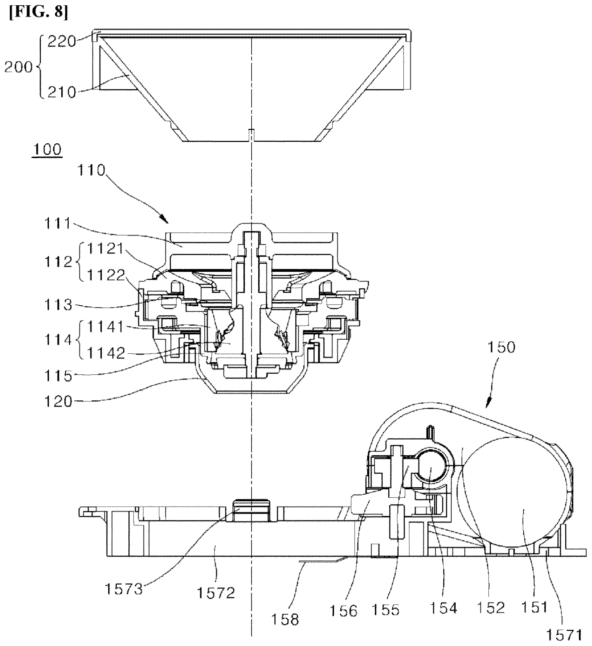

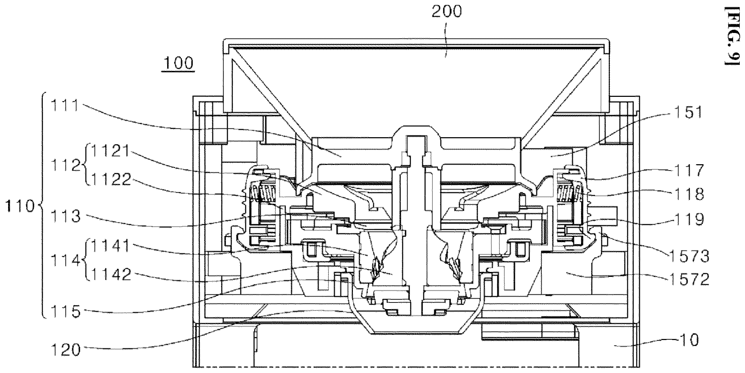

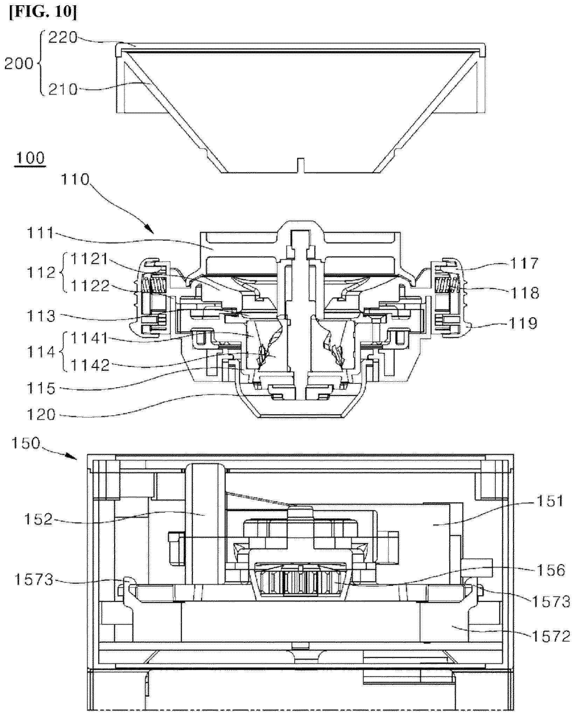

In the drawings, FIG. 5 is a perspective view showing a grinder of a drip coffee machine, FIG. 6 is an exploded perspective view showing a detailed configuration of a grinder of a drip coffee machine, FIG. 7 is a side cross-sectional view showing an internal structure of a grinder of a drip coffee machine, FIG. 8 is a side exploded cross-sectional view showing an internal structure of a grinder of a drip coffee machine, FIG. 9 is a front cross-sectional view showing an internal structure of a grinder of a drip coffee machine, FIG. 10 is a front exploded cross-sectional view showing an internal structure of a grinder of a drip coffee machine.

As shown, the grinder 100 may be detachably coupled to the case 10 (see FIG. 7).

The grinder 100 includes a grinder body 110 and a grinder driving part 150.

The grinder body 110 includes a burr 114 that rotates to grind the coffee beans supplied from the hopper 200.

The grinder driving part 150 is connected to the grinder body 110, and the grinder body 110 may be detachably coupled to the base 157 of the grinder driving unit 150 in a hook manner.

Specifically, the grinder body 110 further includes a burr housing 112 and a burr rotator 115.

The burr housing 112 refers to a housing (or case) embedding the burr 114.

The burr rotator 115 is coupled to surround the burr 114 in a circumferential direction, and is a member with a gear formed on the outer circumferential surface.

The burr rotator 115 may receive a rotational force from the grinder driving part 150 and rotate the internally connected burr 114, more specifically, the outer burr 1141.

The burr 114 includes the outer burr 1141 and an inner burr 1142.

The outer burr 1141 is coupled to the inside of the burr rotator 115. The outer burr 1141 is restrained inside the burr rotator 115 and receives the rotational force from the burr rotator 1151 to rotate to grind the coffee beans.

The inner burr 1142 is concentric with the outer burr 1141 and is located inside the outer burr 1141. The inner burr 1142 may be formed to correspond to the internal shape and size of the outer burr 1141.

The burr housing 112 includes a burr upper housing 1121 and a burr lower housing 1122.

The burr upper housing 1121 is vertically disposed to face the hopper 200 upward and downward.

The burr lower housing 1122 is coupled to the lower portion of the burr upper housing 1121. The burr lower housing 1122 may include the burr 114, that is, both the outer burr 1141 and the inner burr 1142, in the space provided between the burr upper housing 1121.

In addition, the grinder body 100 further includes a grinder shaft 130.

The grinder shaft 130 corresponds to the rotation shaft of the burr 114 that is coupled through the center of the burr 114.

The grinder shaft 130 is coupled by penetrating the burr upper housing 1121 and burr lower housing 1142, and may have a shape that protrudes a predetermined length from the upper and lower portions of the burr housing 112.

In addition, the grinder body 100 further includes a grinder level knob 111.

The grinder level knob 111 is disposed to face the lower portion of the hopper 200.

The grinder level knob 111 provides the function of adjusting the grind size of the coffee beans supplied from the hopper 200.

For example, the grinder level knob 111 may be mounted to be connected to the upper protrusion of the grinder shaft 130 that protrudes to the upper portion of the burr upper housing 1121 by a predetermined length.

Specifically, the grinder level knob 111 may be adjusted and rotated in a set direction to adjust the grinding degree of coffee beans.

When the grinder level knob 111 is rotated in the set direction, a gap between the outer burr 1141 and the inner burr 1142 may be adjusted depending on the rotation direction or displacement. Accordingly, the grinding degree of the coffee beans, that is, the particle size of the ground coffee powder, may be changed and adjusted.

In addition, the grinder body 110 further includes a grinder shaft fixing part 140.

The grinder shaft fixing part 140 is located at the lower portion of the burr lower housing 1122.

The grinder shaft fixing part 140 is coupled to the lower protrusion of the grinder shaft 130 that protrudes a predetermined length from the lower portion of the burr lower housing 1122. The grinder shaft fixing part 140 supports the lower end of the grinder shaft 130.

In this way, the grinder shaft 130 may be stably supported at both ends in the longitudinal direction within the grinder body 110. The upper end of the grinder shaft 130 may be supported by being connected to the center of the grinder level knob 111, and the lower end of the grinder shaft 130 may be supported by a separate grinder shaft fixing part 140.

In addition, the grinder body 110 further includes a burr holder 113.

The burr holder 113 is located inside the burr housing 112, and serves to secure and hold the burr rotator 115 and outer burr 1141.

In addition, the grinder body 110 further includes a ground guide 120 that discharges the coffee powder ground by the rotation of the burr 114 toward the lower portion, that is, the upper portion of the dripper.

The ground guide 120 is located at a lower portion of the burr rotator 115.

The ground guide 120 may be located to be vertically disposed at the lower portion of the burr lower housing 1122. Accordingly, the coffee powder ground by the rotation of the burr 114 may pass through the ground guide 120 and be supplied into the inside of the dripper 60 (see FIG. 3).

In addition, the grinder body 110 further includes a bearing holder 116.

The bearing holder 116 is disposed to surround the burr rotator 115 in the circumferential direction and reduces friction to enable smooth rotation when the burr rotator 115 rotates.

For example, the bearing holder 116 may be provided with a plurality of ball bearings that contact and support the burr rotator 115 to reduce rotational friction of the burr rotator 115.

In addition, a coffee bean inlet 1123 is formed in the burr housing 112 included in the grinder body 110.

For example, the burr upper housing 1121 is vertically disposed upward and downward with respect to the hopper 200, and the coffee bean inlet 1123, through which the coffee beans supplied from the hopper 200 are introduced toward the burr 114, is formed at the inner center of the burr upper housing 1121.

In addition, the grinder body 110 includes a release button 117.

Specifically, the release button 117 is located on the burr housing 112 and has a pressable shape, allowing the ground body 110 to be detachably coupled to the base 157 of the grinder driving part 150.

For example, one release button 117 may be provided on each of both sides of the burr upper housing 1121, that is, two release buttons may be provided on the burr upper housing 1121.

The release button 117 is elastically supported on both sides of the burr upper housing 1121 by a built-in spring 118, allowing the user to press the two release buttons 117 at the same time..

Referring to FIGS. 9 and 10, a hook protrusion 1171 protruding outward is formed at the bottom of the release button 117. Also, a fastening piece 1573 to which the hook protrusion 1171 is fixed may be formed on the base 157 of the grinder driving part 150.

When the release button 117 is pressed in the radial direction (i.e., inward direction) from both sides of the burr upper housing 1121, fastening and disengagement between the hook projection 1171 and the fastening piece 1573 becomes possible. Accordingly, the grinder body 110 may be easily attached and detached according to the user's needs. As a result, there is an advantage that the grinder body 110 may be cleaned and replaced.

In the structure of a typical conventional grinder, the grinder is fixed to the case 10, that is, the body, making it difficult to clean the coffee powder attached to the lower portion of the burr or grinder. According to the embodiment of the present invention, there is an advantage that the user can easily clean the grinder body 110 by simplifying the attachment and detachment operation.

The grinder driving part 150 includes a grinder motor 151, a rotational force transmission gear 153 that transmits the rotational force of the grinder motor 151, a worm gear 154, a worm wheel 155, and a driving gear 156.

The grinder motor 151 refers to a motor that generates the rotational force necessary for rotation of the burr 114.

The rotational force transmission gear 153 includes a first gear 1531 connected to the driving shaft of the grinder motor 151, and a second gear 1532 engaged with and connected to the first gear 1531 to have a set gear ratio.

The worm gear 154 is connected to the rotation center of the second gear 1532 and rotates. The worm wheel 155 corresponds to and is connected to the worm gear 154, rotates in engagement with the worm gear 154, and transmits the rotational force to the driving gear 156.

The driving gear 156 is coupled to the same axis and rotates so as to form the same center as the worm wheel 155. The driving gear 156 is gear-coupled with the burr rotator 115 and transmits the rotational force to the burr 114.

In other words, the driving gear 156 is disposed to engage with the burr rotator 115. The burr rotator 115 rotates in conjunction with the rotation of the driving gear 156. The outer burr 1141 is connected to the inside of the burr rotator 115, and the outer burr 1141 rotates together with the burr rotator 115.

In this way, the burr 114 of the grinder body 110 may receive the rotational force of the grinder driving part 150 through the gear connection of the burr rotator 115 and driving gear 156, and the grinder body 110 allows attachment and detachment.

In addition, the grinder driving part 110 includes a gear case 152 and a base 157.

The gear case 152 is a case that protects the gear assembly from the outside by mounting the rotational force transmission gear 153, worm gear 154, and worm wheel 155 on an inside the case.

The base 157 serves to support the grinder motor 151, gear case 152, and driving gear 156 by seating them in designated positions.

For example, the gear case 152 includes an upper gear case 1521 and a lower gear case 1522.

The gear upper case 1521 is coupled to cover the upper portions of the rotational force transmission gear 153 including the first gear 1531 and second gear 1532, worm gear 154, and worm wheel 155.

The illustrated shape of the gear upper case 1521 is an exemplary shape, and may be changed to a different shape, and may include various modified examples.

The gear lower case 1522 is coupled to the lower portion of the gear upper case 1521.

The gear lower case 1522 is seated on the first seating portion 1571 provided on one side of the base 157, and may be coupled to be fixed to the upper portion of the base 157.

The illustrated shape of the gear lower case 1522 is an exemplary shape, and may be changed to a different shape, and may include various modified examples.

Meanwhile, a second seating portion 1572 is formed on the other side of the base 157. The second seating portion 1572 refers to a portion where the grinder body 110 is seated.

In addition, a static grounding plate 158 made of an elastic metal may be provided at the lower portion of the base 157.

Specifically, one end of the ground plate 158 is connected to the electrical ground provided in the case 10 of the drip coffee machine, that is, the body of the drip coffee machine.

Also, the other end of the ground plate 158 may be disposed in physical contact with the metal part of the grinder body 110, that is, the ground guide 120 made of metal.

The ground guide 120 is located at the lower portion of the burr rotator 115, and serves to discharge the coffee powder ground by the rotation of the burr 114 downward toward the dripper 60 (see FIG. 3).

The ground guide 120 may be made of a metal material that conducts electricity.

When the ground body 110 is seated and detachably coupled to the base 157 of the ground driving part 150, that is, the second seating portion 1572 of the base 157, the ground plate 158 is in contact with the ground guide 120 made of metal. As a result, static electricity can be eliminated to prevent the ground coffee powder from sticking to the ground body 110 and causing contamination.

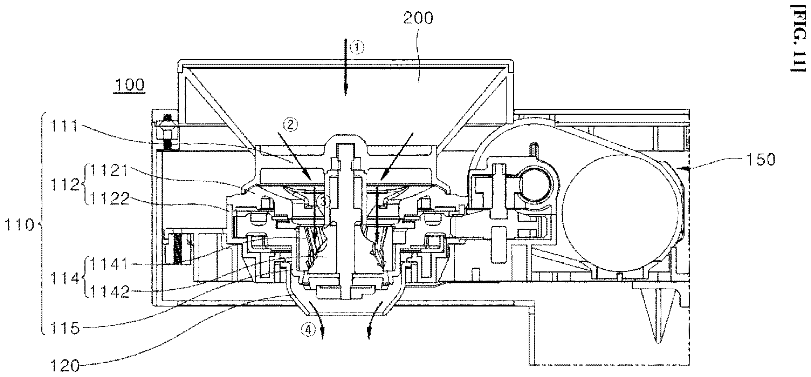

FIG. 11 is a diagram showing the flow direction of coffee beans (or coffee powder) in the internal structure of the grinder of the drip coffee machine according to an embodiment of the present invention.

As shown, roasted coffee beans are placed in the hopper 200.

Next, the coffee beans stored in the hopper 200 are introduced into the grinder body 110 and toward the burr 114 through the grinder level knob 111 and burr upper housing 1121.

Then, the coffee beans are ground by the rotation of the burr 114 and made into coffee powder. Specifically, coffee beans flow into the space between the outer burr 1141 and the inner burr 1142. The coffee beans are ground into gradually smaller sizes between the rotating outer burr 1141 and inner burr 1142 fixed inside the outer burr 1141.

Meanwhile, the ground coffee beans that come out of the narrow gap between the outer burr 1141 and the inner burr 1142 flow out along the ground guide 120 and are contained in the dripper 60 (see FIG. 3).

However, during the process of grinding the coffee beans in the burr 114, the coffee powder adheres to the inside, outside, or surrounding structures of the ground body 110 due to static electricity. Therefore, there is a need to eliminate the static electricity generated during the grinding process.

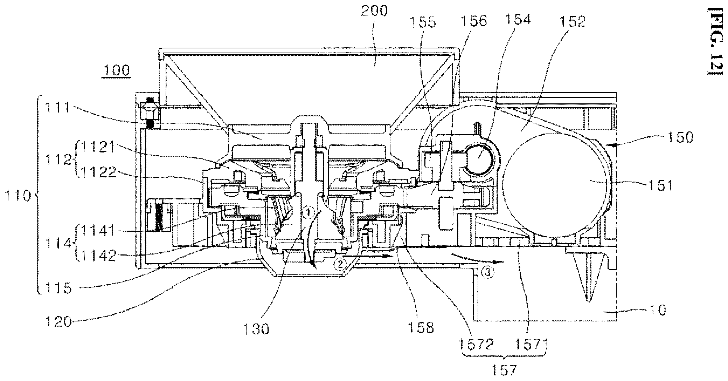

Hereinafter, various implementation examples of a ground path for eliminating static electricity will be described with reference to the attached FIGS. 12, 13, and 14.

FIG. 12 is a diagram showing a first implementation example of a ground path for eliminating static electricity in the internal structure of the grinder of the drip coffee machine according to an embodiment of the present invention.

Referring to FIG. 12, among the components of the grinder body 110, the inner burr 1142, grinder shaft 130, grinder shaft fixing part 140, and ground guide 120 are made of an electrically conductive material (e.g. metal material, etc.).

In this case, the ground path (see arrow order in FIG. 12) is formed along the inner burr 1142, grinder shaft 130, grinder shaft fixing part 140, ground guide 120, ground plate 158, and case, that is, the electrical ground provided in the body is formed. As a result, the static electricity generated in the detachable grinder body 110 may be eliminated through the ground plate 158.

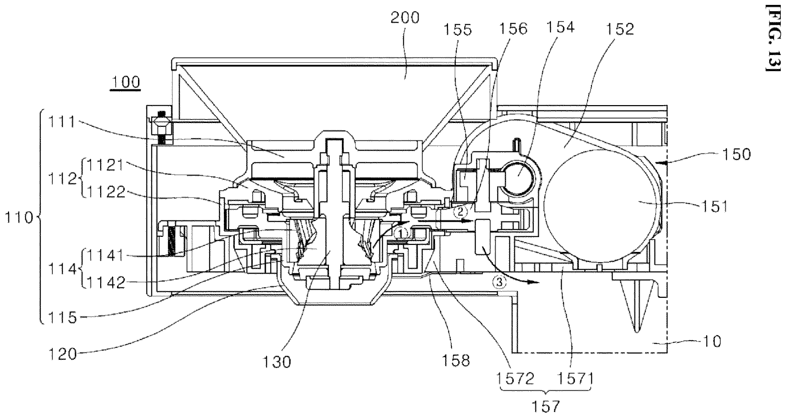

FIG. 13 is a diagram showing a second implementation example of a ground path for eliminating static electricity in the internal structure of the grinder of the drip coffee machine according to an embodiment of the present invention.

Referring to FIG. 13, the burr rotator 115 connected to the burr 114 and the driving gear 156 that transmits the rotational force to the burr rotator 115 are made of an electrically conductive material (e.g., metal, etc.). Then, the driving gear 156 is connected to the electrical ground provided in the case.

In this case, the ground path (see arrow order in FIG. 13) is formed along the outer burr 1141, burr rotator 115, driving gear 156, rotation shaft of the driving gear 156, and electrical ground.

While the burr 114 is grinding the coffee beans, the burr rotator 115 and driving gear 156 are always in contact, so the static electricity generated during the grinding process of the coffee beans is effectively eliminated using the ground path.

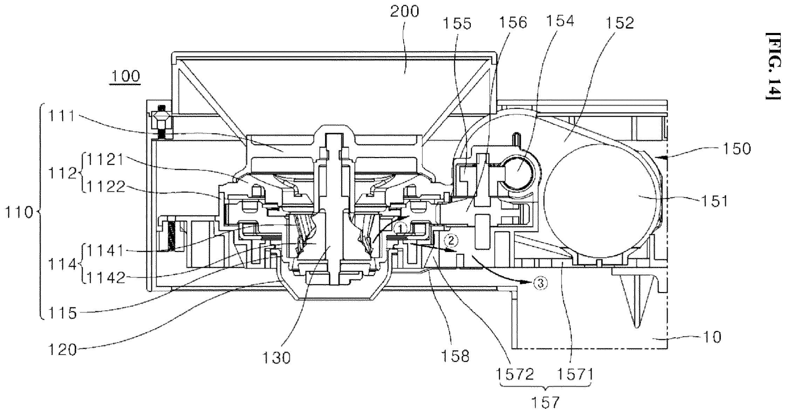

FIG. 14 is a diagram showing a third implementation example of a ground path for eliminating static electricity in the internal structure of the grinder of the drip coffee machine according to an embodiment of the present invention.

Referring to FIG. 14, the bar lower housing 1122 of the grinder body 110 is made of an electrically conductive material (e.g., metal material, etc.), and the base 157 of the grinder driving part 150 (for more details, refer to the second seating portion 1572) is made of an electrically conductive material (e.g., metal material, etc.) and connected to the electrical ground.

In this case, the ground path (see arrow order in FIG. 14) is formed along the burr lower housing 1122, base 157 of the grinder driving part 150, and electrical ground.

During the grinding process of coffee beans, the burr lower housing 1122 and base 157 of the grinder driving part 150 remain in contact with each other. Therefore, the static electricity generated during the grinding process of coffee beans can be effectively eliminated using the grounding path.

Meanwhile, the ground guide 120 may have an inner wall inclined toward the center as it goes downward. In this case, the inclined shape provides a sliding surface on which the coffee bean powder flows.

The coffee powder ground inside the grinder body 110 falls and scatters around during the process of being supplied to the upper portion of the dripper 60 (see FIG. 3), easily contaminating surrounding structures.

When the inner wall of the ground guide 120 is improved to a shape that slopes toward the center as it moves downward, the coffee bean powder flowing down the sloped shape, that is, the sliding surface, is moved to the dripper 60 (FIG. 3) by inertial force. (reference) flows toward the center. As a result, contamination of surrounding structures due to adhesion or scattering of coffee bean powder can be reduced.

As described above, according to the configuration and operation of the present invention, the hopper, grinder, and dripper are disposed vertically up and down to eliminate a separate passage through which the coffee powder is transported, thereby minimizing the movement path of the coffee powder, and minimizing the structures to which coffee powder can stick. As a result, it has the advantage of minimizing variation in coffee quality.

Furthermore, the structure has been improved so that the grinder is detachably coupled to the case, making it easier to separate and couple the grinder, which has the advantage of allowing the grinder to be separated to easily clean coffee powder.

Furthermore, by improving the wall surface of the guide that supplies coffee powder to the dripper to have an inclined shape toward the center, the coffee powder can be allowed to fall into the central area of the dripper without being blown around. As a result, there is an advantage in reducing the possibility of coffee powder blowing around and contaminating the surrounding area when the coffee powder is fed into the dripper.

In addition, when coupling the detachable grinder to the case, the static electricity generated in the burr can be eliminated by bringing the grinder into direct contact with the ground plate (i.e., grounding). As a result, there is an advantage in preventing coffee powder from sticking to the lower portion of the grinder or other surrounding structures and contaminating the drip coffee machine and its surroundings.

As described above, the present invention has been described with reference to the illustrative drawings, but the present invention is not limited to the embodiments and drawings disclosed herein, and various modifications may be made by those skilled in the art within the scope of the technical idea of the present invention. In addition, although the operational effects according to the configuration of the present invention were not explicitly described and explained while explaining the embodiments of the present invention, it is apparent that the predictable effects due to the configuration should also be recognized.

## Claims

1. A drip coffee machine comprising:
a case;
a hopper that is located on an upper portion of the case and receives a coffee bean; and
a grinder that receives the coffee bean from the hopper and grinds the coffee bean,
wherein the grinder is detachably coupled to the case,
wherein the grinder includes:
a grinder body that includes a burr that rotates to grind the coffee bean supplied from the hopper; and
a grinder driving part that is connected to the grinder body and provides a rotational force to the burr.

2. The drip coffee machine 1, wherein the grinder body includes:
a burr housing embedding the burr; and
a burr rotator that is coupled to surround the burr and receives the rotational force from the grinder driving part to rotate the burr,
wherein the burr includes:
an outer burr that is coupled to an inside of the burr rotator, and receives the rotational force from the burr rotator and rotates to grind the coffee bean; and
an inner burr that is cocentric with the outer burr and is located inside the outer burr.

3. The drip coffee machine of claim 2, wherein the burr housing includes:
a burr upper housing that is vertically disposed to face the hopper upward and downward; and
a burr lower housing that is coupled to a lower portion of the burr upper housing and embeds the burr in a space provided between the burr upper housing and the burr lower housing.

4. The drip coffee machine of claim 3, wherein the grinder body further includes a grinder shaft that penetrates a center of the burr and is coupled thereto,
wherein the grinder shaft is formed to penetrate the burr upper housing and burr lower housing and protrude to the upper and lower portions of the burr housing by a predetermined length.

5. The drip coffee machine of claim 4, wherein the grinder body further includes a grinder level knob that is disposed to face a lower portion of the hopper and adjusts a grinding degree of the coffee bean supplied from the hopper,
wherein the grinder level knob is coupled to an upper protrusion portion of the grinder shaft at an upper portion of the burr upper housing.

6. The drip coffee machine of claim 5, wherein the burr includes:
an outer burr that is coupled to an inside of the burr rotator, receives the rotational force from the burr rotator and rotates to grind the coffee bean; and
an inner burr that is cocentric with the outer burr and is located inside the outer burr,
wherein a rotation of the grinder level knob is adjusted in a set direction to adjust the grinding degree of the coffee bean, and
when the grinder level knob is rotated, a gap between the outer burr and the inner burr is changed.

7. The drip coffee machine of claim 4, wherein the grinder body further includes a grinder shaft fixing part that is located at a lower portion of the burr lower housing and is coupled to a lower protrusion portion of the grinder shaft to support a lower end of the grinder shaft.

8. The drip coffee machine of claim 1, wherein the grinder body includes:
a burr housing embedding the burr; and
a burr rotator that is coupled to surround the burr and receives the rotational force from the grinder driving part to rotate the burr,
wherein the grinder body further includes a burr holder that is located inside the burr housing and holds the burr rotator and outer burr.

9. The drip coffee machine of claim 1, wherein the grinder body includes:
a burr housing embedding the burr; and
a burr rotator that is coupled to surround the burr and receives the rotational force from the grinder driving part to rotate the burr,
wherein the grinder body further includes a ground guide that is located at a lower portion of the burr rotator, and discharges the coffee powder ground by the rotation of the burr to a lower portion thereof.

10. The drip coffee machine of claim 1, wherein the grinder body includes:
a burr housing embedding the burr; and
a burr rotator that is coupled to surround the burr and receives the rotational force from the grinder driving part to rotate the burr,
wherein the grinder body further includes a bearing holder that surrounds the burr rotator in a circumferential direction and includes a ball bearing to reduce the rotational friction of the burr rotator.

11. The drip coffee machine of claim 1, wherein the grinder body includes:
a burr housing embedding the burr; and
a burr rotator that is coupled to surround the burr and receives the rotational force from the grinder driving part to rotate the burr,
wherein the burr housing further includes a coffee bean inlet that introduces the coffee bean supplied from the hopper toward the burr.

12. The drip coffee machine of claim 1, wherein the grinder body includes:
a burr housing embedding the burr; and
a burr rotator that is coupled to surround the burr and receives the rotational force from the grinder driving part to rotate the burr,
wherein the grinder body further include a release button that is elastically supported by springs on both sides of the burr housing and is pressed to enable attachment and detachment of the ground body.

13. The drip coffee machine of claim 1, wherein the grinder driving part includes:
a grinder motor that generates the rotational force necessary for rotation of the burr;
a rotational force transmission gear that includes a first gear connected to a driving shaft of the grinder motor and a second gear engaged with and connected to the first gear to have a set gear ratio;
a worm gear that is connected to a rotation center of the second gear and rotates;
a worm wheel that rotates in engagement with the worm gear; and
a driving gear that is coupled and rotates concentrically with the worm wheel and transmits the rotational force to the burr.

14. The drip coffee machine of claim 13, wherein the grinder driving part includes:
a gear case that mounts the rotational force transmission gear, the worm gear, and the worm wheel inside; and
a base that seats and supports the grinder motor, the gear case, and the driving gear.

15. The drip coffee machine of claim 14, wherein the gear case includes:
a gear upper case that is coupled to cover the rotational force transmission gear, the worm gear, an upper portion of the worm wheel; and
a gear lower case that is coupled to a lower portion of the gear upper case and is seated on a first seating part provided on one side of the base and fixed to an upper portion of the base.

16. The drip coffee machine of claim 15, wherein a second seating portion on which the grinder body is seated is formed on the other side of the base, and a ground plate made of an elastic metal is provided on a lower portion of the base.

17. The drip coffee machine of claim 16, wherein the grinder body includes:
a burr housing embedding the burr; and
a burr rotator that is coupled to surround the burr and receives the rotational force from the grinder drive part to rotate the burr,
the grinder body further includes a ground guide that is located at a lower portion of the burr rotator and discharges the coffee powder ground by rotation of the burr to a lower portion thereof,
wherein the ground plate is in contact with the ground guide when the ground body is seated on the second seating part.

18. The drip coffee machine of claim 17, wherein the ground guide has a shape in which an inner wall surface slopes toward a center as it goes downward.

19. A drip coffee machine comprising:
a case;
a water tank that is located at a rear top of the case and stores water;
a hopper that is located at a front top of the case and stores a coffee bean;
a grinder that is located at a lower portion of the hopper and receives the coffee bean from the hopper and grinds the coffee bean;
a dripper that is located at a lower portion of the grinder, receives the coffee powder ground from the grinder and extracts liquid coffee;
a water outlet unit that includes a water outlet dropping the water into an inside of the dripper; and
a driving unit that changes a position of the water outlet within an upper drip area of the dripper,
wherein the grinder is detachably coupled to the case, and
the hopper, the grinder, and the dripper are vertically disposed upward and downward.

20. The drip coffee machine of claim 19, wherein the grinder body includes:
a burr housing embedding the burr; and
a burr rotator that is coupled to surround the burr and receives the rotational force from the grinder driving part to rotate the burr,
wherein the grinder body further includes a release button that is elastically supported by springs on both sides of the burr housing and is pressed to enable attachment and detachment of the ground body.
